Europäisches Patentamt

European Patent Office

Office européen des brevets

(11) Veröffentlichungsnummer: **0 362 727 B1**

(12) **EUROPÄISCHE PATENTSCHRIFT**

(45) Veröffentlichungstag der Patentschrift: **18.01.95**

(51) Int. Cl.6: **C08G 8/30**

(21) Anmeldenummer: **89118139.8**

(22) Anmeldetag: **30.09.89**

(54) **Modifizierte Novolake.**

(30) Priorität: **04.10.88 DE 3833656**

(43) Veröffentlichungstag der Anmeldung:
**11.04.90 Patentblatt 90/15**

(45) Bekanntmachung des Hinweises auf die
Patenterteilung:
**18.01.95 Patentblatt 95/03**

(84) Benannte Vertragsstaaten:
**AT CH DE ES FR GB GR IT LI LU NL SE**

(56) Entgegenhaltungen:
EP-A- 0 004 402         DD-A- 30 878
DE-A- 1 745 336         FR-A- 470 810
FR-A- 860 381           GB-A- 2 078 233
US-A- 2 730 511

PATENT ABSTRACTS OF JAPAN, Band 11,
Nr. 159 (C-423)(2606), 22. Mai 1987; & JP-
A-61287919

H.Kittel, Lehrbuch der Lacke und Beschichtungen Bd. 1(1971), Teil 1, S. 325-364

(73) Patentinhaber: **HOECHST AKTIENGESELL-
SCHAFT**

**D-65926 Frankfurt (DE)**

(72) Erfinder: **Hesse, Wolfgang, Dr.**
**Rossbachhöhe 42**
**D-6204 Taunusstein (DE)**
Erfinder: **Leicht, Erhard, Dr.**
**Kurhausstrasse 56**
**D-6238 Hofheim am Taunus (DE)**
Erfinder: **Sattelmeyer, Richard, Dr.**
**Gabelsbornstrasse 32**
**D-6200 Wiesbaden (DE)**

EP 0 362 727 B1

**Beschreibung**

Die Erfindung betrifft modifizierte Novolake auf der Basis von gegenüber Formaldehyd trifunktionellen Phenolen, die als Modifizierungsbestandteile Terpene und ungesättigte Fettsäuren bzw. deren Ester oder Amide enthalten, Verfahren zu ihrer Herstellung und ihre Verwendung, vorzugsweise als Verstärkerharze für Gummi und Elastomere, als Klebrigmacher für Kautschuk, als Bindemittel für Reibbeläge, härtbare Formmassen, Imprägniermittel, Beschichtungen, Lacke und Bindemittel für kleinteilige anorganische Substrate.

Es ist bekannt, Novolake aus Alkyl- oder Arylphenolen mit ungesättigten fetten Ölen, den daraus gewinnbaren Fettsäuren oder deren Derivaten, wie Amiden bzw. Estern, zu verkochen und dadurch zu Bindemitteln für luft- oder ofentrocknende Lacke oder Druckfarben zu gelangen. Dabei bilden sich zähfließende Weichharze, die oxidativ trocknen.

Es ist ferner bekannt, Phenole, die über mindestens einen freien Kernwasserstoff in Ortho- oder Parastellung zur phenolischen Hydroxylgruppe verfügen, in Gegenwart von Lewis- oder Protonensäuren mit Terpenen zu substituieren. Dabei entstehen relativ niedrigmolekulare Kunstharze mit relativ hohem Schmelzpunkt, die aber nicht mehr vernetzbar sind.

Aus DD-B 30 878 und aus H. Kittel, Lehrbuch der Lacke und Beschichtungen, Band I (1971), Teil 1, S. 325-364 ist bekannt, Phenolresole mit Terpenen und ungesättigten Carbonsäuren zu modifizieren. Die Terpene reagieren dabei mit den in den Resolen definitionsgemäß enthaltenen Hydroxymethylgruppen und unsubstituierten Kernpositionen unter Ringbildung. In den erhaltenen modifizierten Resolen fehlen daher die für eine nachträgliche Vernetzung benötigten unsubstituierten ortho- und/oder para-Positionen zu den phenolischen Hydroxylgruppen, so daß diese Verbindungen als Verstärker für vulkanisierten Kautschuk nicht geeignet sind.

Entweder nur mit Terpenen oder nur mit ungesättigten Carbonsäuren chemisch modifizierte Novolake sind in FR-A 8 60 381, FR-A 470 810 und Patent-Abstracts of Japan Bd. 11, Nr. 159 (C 423) (2606), 1987 beschrieben. Mit derartigen Harzen verstärkter Kautschuk weist hinsichtlich der Shore-Härte A, der Spannungswerte bei Dehnung und des "heat-build-up" noch Verbesserungsmöglichkeiten auf.

Mit Terpenen und zusätzlich mit ungesättigten Polycarbonsäuren modifizierte Novolake sind in EP-A 0 004 402 beschrieben. Sie eignen sich als Verstärkerharze für nicht vulkanisierten Kautschuk und Kautschukhaltige Klebstoffe und wirken über eine Salzbildung mit Kationen aus den dem Kautschuk zugesetzten Metalloxiden. Als Verstärker für vulkanisierten Kautschuk sind sie jedoch weniger geeignet.

Weiterhin ist es Stand der Technik, acetylierte Novolake mit Fettsäuren umzuestern oder Novolake mit Fettsäuren in Gegenwart von Katalysatoren zu verestern. Solche Harze können, wenn nach der Umsetzung noch phenolische Hydroxylgruppen in nennenswertem Maße vorhanden sind, gegebenenfalls Vernetzungsreaktionen zugeführt werden. Sie stellen jedoch hochviskose Flüssigkeiten oder zähfließende Weichharze ohne Schmelzpunkte dar, die in dieser Form zum Beispiel in der Kautschuktechnologie und bei anderen Anwendungen, bei denen es wie bei der Herstellung von Reibbelägen, härtbaren Formmassen oder Sinterlacken, d.h. bei allen Anwendungen, bei denen ein mahlbares Zwischenprodukt benötigt wird, nicht angewandt werden können.

Es besteht jedoch ein erhebliches technisches Interesse an hydrophob substituierten, trotzdem aber vernetz- und mahlbaren Novolaken, weil diese eine weitaus bessere Verträglichkeit mit hydrophoben Substraten aufweisen. Außerdem ist es erwünscht, die Vernetzungsgeschwindigkeit von Novolak-Vernetzer-Gemischen bei gegebener Temperatur zu steuern. Es ist ferner erwünscht, die hohe Sprödigkeit der Vernetzungsprodukte von Novolaken zu verringern.

Es wurde nun überraschenderweise gefunden, daß diese Schwierigkeiten durch modifizierte Novolake, die als Modifizierungsbestandteile Terpene und ungesättigte Fettsäuren und/oder deren Ester oder Amide enthalten, überwunden werden können.

Gegenstand der Erfindung sind daher modifizierte Novolake auf Basis von gegenüber Formaldehyd trifunktionellen Phenolen, dadurch gekennzeichnet, daß die Novolake als Bestandteile Terpene und ungesättigte Fettsäuren und/oder deren Ester oder Amide enthalten, wobei das Gewichtsverhältnis zwischen Terpenen und ungesättigten Fettsäuren bzw. deren Ester oder Amide im Bereich von 98,5:2,5 bis 2,5:98,5 und das Gewichtsverhältnis zwischen der phenolischen Komponente und der Summe der Modifizierungskomponenten im Bereich von 95:5 bis 5:95, vorzugsweise zwischen 90:10 bis 10:90, liegt, und die modifizierten Novolake einen Schmelzpunkt höher als 45 °C, vorzugsweise höher als 55 °C, besitzen.

Die neuen erfindungsgemäßen Harze können durch die vorgeschlagenen Maßnahmen in ihrem Vernetzungsverhalten, ihrer Löslichkeit und Verträglichkeit mit anderen Rohstoffen, in ihrer Plastizität und ihren Schmelzpunkten exakt in den gewünschten Bereich gesteuert werden, so daß sich vielfältige Anwendungsmöglichkeiten, insbesondere auf den Einsatzgebieten Gummi, Reib- und Bremsbeläge, härtbare Formmassen, Überzüge und Lacke, Imprägniermittel, Bindemittel für mineralische Stoffe und andere mehr ergeben.

2

Besonders wertvolle Eigenschaften zeigen sie beim Einsatz als Verstärkerharze für Gummi auf der Basis von polaren und/oder unpolaren Kautschuken.

Als Terpene können zum Beispiel verwendet werden: Terpinen, Terpinolen, Limonen, Alphapinen, Betapinen, Ocimen, Myrcen, Cadinen, Betaselinen, die sich von diesen Verbindungen ableitenden Alkohole bzw. Ketone, wie z.B. Pullegon, Caron oder die Terpineole sowie carboxylgruppenhaltige Terpene wie Abietinsäure und ihre Isomeren. Es können auch die natürlich vorkommenden oder technisch hergestellten Gemische wie Terpentinöl oder Kolophonium verwendet werden. Bevorzugt ist die Benutzung von cyclischen oder polycyclischen Terpenen, insbesondere bicyclische und/oder tricyclische Terpene.

Als ungesättigte Fettsäuren werden z.B. bevorzugt verwendet: Ölsäure, Linolsäure, Linolensäure, die bei der Spaltung von Ölen erhaltenen ungesättigten Fettsäuregemische wie zum Beispiel Leinölfettsäure, Sojafettsäure, Holzölfettsäure, Rizinolsäure und die durch Dehydratisierung daraus gewonnene Rizinensäure u.a.m. Besonders bevorzugt ist z.B. die Verwendung von Tallölfettsäure mit Harzgehalten von 0,1 bis 30 Gew%, bezogen auf die Tallölfettsäure, bevorzugt zwischen 0,5 bis 20 Gew.-%.

Außer den Fettsäuren kommen beispielsweise die Ester bzw. Mischester z.B. der oben genannten Fettsäuren mit Mono- oder Polyalkoholen, wie Methanol, Ethanol, Propanol, Butanol, Methylglykol, Ethylglykol, Butylglykol, Ethylenglykol und seinen Homologen, Glycerin und Pentaerythrit, in Betracht. Es ist auch möglich, Amide, Monoalkyl- und Dialkylamide dieser Fettsäuren mit Alkylresten von 1 bis 8, vorzugsweise 1 bis 4 C-Atomen, zu verwenden.

Die Modifizierungsmittel können sowohl einzeln als auch im Gemisch eingesetzt werden.

Für die Herstellung der zu modifizierenden Novolake dienen als Phenolkomponente trifunktionelle Phenole, wie z.B. Phenol, m-Kresol, 3,5-Dimethylphenol und Resorcin. Diesen Phenolen können gegenüber Aldehyden bifunktionelle Phenole, wie z.B. p-Kresol oder o-Kresol, beigemischt sein. Bevorzugt ist die Verwendung von Phenol und Resorcin, besonders bevorzugt ist die Verwendung von Phenol. Als Aldehyde kommen z.B. Formaldehyd, Acetaldehyd, Propionaldehyd, Butyraldehyd, Isobutyraldehyd, Valeraldehyd, Hexyl-, Heptyl-, Octyl-, Nonyl- und Decylaldehyd und ihre Isomeren in Frage. Es ist auch möglich, noch höhere Aldehyde zu verwenden. Bevorzugt ist die Verwendung vom Formaldehyd.

Die Herstellung der Harze erfolgt dadurch, daß vorgebildete Novolake in der schmelze oder in Lösung mit den Modifikanten bei Temperaturen zwischen 80 bis 300°C, vorzugsweise 100 bis 290°C, unter Mitverwendung von Schwefelsäure und/oder deren Derivaten als Katalysator zur Reaktion gebracht werden.

Dabei ist es, wenn verschiedene Modifikanten verwendet werden, prinzipiell gleichgültig, in welcher Reihenfolge oder ob sie als Gemisch eingesetzt werden. Zwar können sich im konkreten Einzelfall die Harzeigenschaften durch die Variation dieser Bedingungen ändern, jedoch ist dieses ein geeignetes Mittel, gewünschte Stoffeigenschaften einzustellen. Vorzugsweise werden Schwefelsäure oder deren Derivate als Katalysator nicht am Anfang in einer Portion, sondern über die gesamte Reaktionszeit verteilt zuzugeben.

Es ist aber auch möglich, die Herstellung der modifizierten Novolake durch simultane Umsetzung der phenolischen Komponente, des Aldehyds und der Modifikanten durchzuführen. Dabei geht man vorzugsweise so vor, daß das Phenol und ein mit Wasser nicht mischbares Lösemittel, wie z.B. Toluol, Xylol oder dergleichen und ein Teil des Katalysators, vorgelegt werden. Dann erhitzt man auf Reaktionstemperatur und läßt gleichzeitig den Aldehyd, die Modifikanten und den Katalysator zulaufen. Durch azeotrope Destillation kann das Kondensationswasser und gegebenenfalls das zum Lösen der Aldehydkomponente verwendete Wasser entfernt werden. Anschließend werden dann die flüchtigen Bestandteile abdestilliert, wobei die letzte Phase der Destillation vorzugsweise unter Vakuum vorgenommen wird. Der Katalysator kann nach der Reaktion neutralisiert werden. Die Neutralisation erübrigt sich möglicherweise, weil Schwefelsäure oder deren Derivaten durch Terpene reduktiv zerstört werden.

Die erfindungsgemäß modifizierten Novolake können als Verstärkerharze für Gummi und Elastomere verwendet werden. Dazu werden sie gemeinsam oder getrennt mit dem Vernetzern Hexamethylentetramin und/oder Aminoplaste und/oder Resolen, gegebenenfalls nach einer Vorreaktion, in die noch nicht vulkanisierte Gummi- bzw. Elastomerenmischung eingearbeitet.

Für die Herstellung von verstärktem Gummi geeignete Kautschuktypen sind beispielsweise Naturkautschuk, Styrol-Butadien-Kautschuk, Polybutadien, Polyisopren, Transpolyoctenylen-Butyl-Kautschuk, Ethylen-Propylen-Dien-Terpolymer-Kautschuk oder deren Gemische, wie sie gewöhnlich in der Reifenindustrie oder zur Herstellung technischer Gummiwaren verwendet werden. Styrol-Butadien und Naturkautschuk oder Mischungen dieser Kautschuktypen mit untergeordneten Mengen an anderen Kautschuktypen sind bevorzugt. Sie können in beliebiger Lieferform, z.B. als Ballen oder Pulver sowie z.B. mit Ruß, Anwendung finden. Geeignet sind ferner auch polare Kautschuke, wie z.B. Nitrilkautschuk (Copolymere von Acrylnitril mit Butadien oder Isopren) oder Polyurethankautschuk.

Übliche weitere Zusatzstoffe in der Kautschukmischung sind z.B. Füllstoffe, Vulkanisationsmittel, Beschleuniger, Aktivatoren und Verarbeitungshilfsmittel.

Die erfindungsgemäß erhaltenen Vulkanisate können z.B. als technische Gummiwaren, wie Dämpfungselemente, Gummimanschetten, Bälge, Förderbänder, aber auch für Fahrzeugreifen verwendet werden. Dabei kann der Einsatz der erfindungsgemäßen Mischungen auch in den Schichten erfolgen, die eine gute Haftung zu eingelegten Geweben oder Geflechten haben müssen. Zur Verbesserung der Haftung kann zusätzlich die Anwendung von Haftvermittlern, wie Kobalt- oder anderen Metallverbindungen, und/oder deren Kombination mit Kieselsäure, Resorcin und Härtungsmitteln erfolgen.

Der Gehalt an Novolaken in der Gummimischung beträgt üblicherweise bevorzugt zwischen 2 und 80 Gew.-%, bezogen auf Kautschuk. Insbesondere werden 3 bis 60 Gew.-%, besonders bevorzugt 5 bis 20 Gew.-%, Novolak eingesetzt. Bei der Härtung mit Hexamethylentetramin ist ein Zusatz von vorzugsweise 2 bis 20 Gew.-%, insbesondere von 5 bis 15 Gew.-%, bezogen auf Novolak, erforderlich. Bei der Härtung mit Aminoplasten oder Resolen wird ein Zusatz von vorzugsweise 10 bis 50 Gew.-%, insbesondere von 15 bis 40 Gew.-%, bezogen auf Novolak, eingesetzt.

Nach dem Stand der Technik steigern Verstärkerharze in Gummi jedoch nicht nur die Härte und die Spannungswerte, sondern sie beeinflussen in unerwünschter Weise auch das viskoelastische Verhalten des Gummis derart, daß der viskose Anteil erhöht und dadurch vermehrt mechanische Arbeit in Wärme umgewandelt wird. Dieser Nachteil ist für alle diejenigen Gummiteile von Bedeutung, die, wie Teile von Automobilreifen, beim Betrieb starken mechanischen Einwirkungen ausgesetzt sind. Diese Eigenschaft wird als heat-build-up (HBU) bezeichnet und ist bei Verstärkerharzen nach dem Stand der Technik um so stärker ausgeprägt, je besser das Harz seine Verstärkerwirkung entfaltet.

Die neuen erfindungsgemäß modifizierten Novolake bewirken nun aber neben einer außerordentlichen Steigerung der Verstärkereigenschaften überraschenderweise eine verringerte Entwicklung des HBU. Dabei ist es offensichtlich so, daß einerseits der Fettsäureanteil des Verstärkermittels für die überdurchschnittliche Entwicklung der Verstärkereigenschaften verantwortlich ist, während andererseits die Terpenkomponente neben einer guten Verbesserung der Verstärkereigenschaften den HBU unterdrückt. Dieses Eigenschaftsspektrum der erfindungsgemäßen Harze ist überraschend.

Die erfindungsgemäßen Harze können auch als Klebrigmacher für Kautschuk, insbesondere für Synthese-Kautschuk dienen. Bei der Herstellung von Gummiartikeln aus mehreren Lagen, wie es besonders bei der Herstellung von Autoreifen notwendig ist, verfügen die üblichen nichtvulkanisierten Teile oft nicht über die für die Montage erforderliche Klebrigkeit. Das ist besonders dann der Fall, wenn die Kautschukmischung überwiegend oder ausschließlich aus Synthese-Kautschuk aufgebaut ist. Der Zusatz von erfindungsgemäßen Harzen kann nunmehr aber eine ausreichende Erhöhung der Klebrigkeit bewirken.

Für diesen Anwendungszweck der neuen Harze ist die Mitverwendung von Härtungsmitteln nicht erforderlich, gleichwohl aber möglich.

Weitere Verwendungsmöglichkeiten der erfindungsgemäßen neuen Harze liegen auf dem Gebiet der Reibbeläge, der Imprägniermittel für organische und/oder anorganische Fasern, der Bindemittel für organische und/oder anorganische Fasern, der Überzüge, Beschichtungen und Lacke sowie der Bindemittel für zerkleinerte, vorzugsweise anorganische Materialien. Bei diesen Anwendungen können die erfindungsgemäß modifizierten Novolake gemeinsam mit Härtungsmitteln sowie auch mit Füllstoffen, Zusätzen, Pigmenten und anderen Zusatzstoffen verarbeitet werden.

Bevorzugte Verwendungsmöglichkeiten sind in den Verwendungs Ansprüchen beschrieben.

Die Erfindung wird durch die nachstehenden Beispiele näher erläutert. Wenn nichts anderes vermerkt, sind in den Beispielen unter Teilen Gewichtsteile zu verstehen.

Beispiel 1

A) Herstellung eines Tallölfettsäure-Alphapinen-modifizierten Novolaks

In einem mit Rührer, Thermometer, Rückflußkühler und Tropftrichter versehenen 2-l-Kolben werden 600 g eines aus Phenol und Formaldehyd hergestellten Novolakes mit einem Schmelzpunkt von 74°C, einer Viskosität von 600 mPa·s/20°C (1:1 in Ethylenglykol) (®Alnovol VPN 1322 der Hoechst AG) aufgeschmolzen, mit 0,45 g konz. Schwefelsäure versetzt und bei 120°C innerhalb einer Stunde 200 g Alphapinen zugegeben.

Die Temperatur steigt rasch auf 150°C an. Nach einer Stunde Rühren werden 1,8 g Schwefelsäure, nach einer weiteren Stunde wieder 1,8 g und nach einer nochmaligen Stunde weitere 1,8 g Schwefelsäure, also insgesamt 5,85 g Schwefelsäure, zugegeben.

Nach Zugabe der letzten Menge Schwefelsäure wird noch eine Stunde bei 150°C gerührt und anschließend werden 200 g Tallölfettsäure (Harzgehalt 2 Gew.-%) zugegeben. Die weitere Umsetzung mit Tallölfettsäure erfolgt innerhalb von drei Stunden in Gegenwart von nochmals dreimal 0,9 g Schwefelsäure, die in stündlichen Abständen zugegeben wird. Dann, nach Verbrauch der letzten Schwefelsäure, wird das Reaktionsgemisch nochmals eine Stunde bei 150°C gerührt und sodann am absteigenden Kühler auf 210°C erhitzt. Nach Erreichen dieser Temperatur wird eine Stunde unter Wasserstrahlvakuum destilliert. Es fallen 55 g Destillat mit einem Phenolgehalt von 29,5 Gew.-% an. Im Kolben verbleiben 922 g eines Tallölfettsäure-Alphapinenmodifizierten Novolaks. Die Viskosität beträgt 2400 mpa•s/20°C (1:1 in Ethylenglykol), der Schmelzpunkt liegt bei 86°C und die Säurezahl beträgt 18,4 mg KOH/g.

Die Mischung des Harzes mit Hexamethylentetramin im Verhältnis 9:1 härtet innerhalb von drei Minuten bei 150°C (B-Zeit nach DIN 16916, Teil 2).

B) Prüfung des erfindungsgemäß modifizierten Novolaks aus Beispiel 1A) und des Ausgangsnovolaks (Alnovol VPN 1322) als Verstärkerharz für Gummi

Als Grundmischung dient ein Gemisch aus 100 Teilen Naturkautschuk RSS Nr. 2, 50 Teilen Ruß N 330, 1,5 Teilen Stearinsäure, 5 Teilen ®Zinkoxid RS (Hersteller Harzer Zinkoxyde Henbach KG), 1 Teil ®Vulkanox HS, 1 Teil ®Vulkanox 4010 NA (Antioxidantien, Hersteller Bayer AG), 2,5 Teilen Schwefel, 0,9 Teilen ®Vulkazit CZ und 0,3 Teilen ®Thiuram MS (Beschleuniger, Hersteller Bayer AG). Außer beim Null-Versuch werden auf 100 Teile Kautschuk 9 Teile Novolak und 1 Teil Hexamethylentetramin bzw. 14 Teile Novolak und 6 Teile des Melaminharzes ®Additol VXT 3911 (Hersteller Hoechst AG) verwendet

Novolak und Härtungsmittel werden auf der Walze bei 100°C nacheinander eingearbeitet. Die Vulkanisationstemperatur beträgt 145°C und die Vulkanisationszeit beim Null-Versuch 20 Minuten, bei der Härtung mit Hexamethylentetramin (Hexa) 45 Minuten und bei der Härtung mit Melaminharz (VXT) 60 Minuten.

In der nachfolgenden Tabelle 1 bedeutet die Spalte Shore A die bei 23°C gemessene Shore-Härte A, die Spalten Modul 10 bzw. Modul 25 geben die Spannungswerte in MPa an, die beim Dehnen eines genormten Prüfkörpers um 10 bzw. 25 % entstehen und die Spalte Rollbiegetest (RB 15) betrifft den heat-build-up (HBU). Sie gibt den Temperaturanstieg des Prüfkörpers an, der nach 15 Minuten erreicht wird. Wenn statt einer Temperatur eine Zeit angegeben ist, so bedeutet das die Zeit, nach der der Prüfkörper infolge Überhitzung zerstört wird und dem Test nicht standhält.

Tabelle 1

| Gummitechnische Verstärkerharzprüfung | | | | | |
|---|---|---|---|---|---|
| Harz aus | Vernetzungsmittel | Shore A | Modul 10 | Modul 25 | Rollbiegetest (RB 15) |
| ohne | - | 71 | 0,7 | 1,4 | 28°C |
| Bsp. 1A) | Hexa | 87 | 1,9 | 2,4 | 49°C |
| Alnovol VPN 1322 | Hexa | 82 | 1,2 | 1,8 | 63°C |
| Bsp. 1A) | VXT | 93 | 3,5 | 4,3 | 112°C |
| Alnovol VPN 1322 | VXT | 88 | 1,4 | 2,5 | 4 min |

Beispiel 2

Herstellung eines Sojafettsäure-Alphapinen-modifizierten Novolaks

In einem mit Rührer, Thermometer, zwei Tropftrichtern, Destillationsvorrichtung und Wasserabscheider versehenen 2-l-Kolben werden 658 Teile Phenol, 150 Teile Xylol, 1,8 Teile Schwefelsäure (25 gew.-%ig) sowie 90 Teile Sojaölfettsäure vorgelegt und auf 130°C erhitzt. Bei dieser Temperatur tropft man innerhalb von zwei Stunden eine Mischung aus 411 g einer wäßrigen, 37 gew.-%igen Formaldehydlösung mit 3 g Schwefelsäure zu. Sofort nach Beginn der Zugabe der wäßrigen Formaldehydlösung setzt Wasserabscheidung ein. Nach Beendigung der Wasserabscheidung erhitzt man noch eine Stunde am Umlauf ohne Temperaturbegrenzung, entfernt den Wasserabscheider und gibt 20 Teile Alphapinen zum Ansatz. Man läßt noch eine Stunde am Rückfluß kochen und destilliert anschließend am ansteigenden Kühler bei einer Sumpftemperatur von 210°C flüchtigen Bestandteile ab. Dann legt man Wasserstrahlvakuum an und entfernt bei 210°C innerhalb einer Stunde die restlichen flüchtigen Anteile. Im Kolben verbleiben 729 Teile eines Sojaölfettsäure-Alphapinen-modifizierten Novolak-Harzes mit einem Schmelzpunkt von 82°C und einer Säurezahl von 16 mg KOH/g. Die Viskosität einer 50 gew.-%igen Lösung in Methoxyisopropanol beträgt 2440 mPa•s/20°C. Die Härtungsdauer (B-Zeit) einer Mischung aus 9 Teilen Harz und 1 Teil Hexamethylentetramin beträgt bei 150°C 2 Minuten und 15 Sekunden.

Beispiel 3

In einem Reaktionsgefäß, wie in Beispiel 2 beschrieben, werden 658 Teile Phenol, 150 Teile Toluol und 1,8 Teile Schwefelsäure (25 gew.-%ig) vorgelegt und auf 120°C erhitzt. Es werden zwei getrennte Tropftrichter verwendet.

Aus dem einen Tropftrichter läßt man innerhalb von drei Stunden, über den Zeitraum gleichmäßig verteilt, eine Mischung aus 397 Teilen wäßriger Formaldehydlösung und 12,15 Teilen Schwefelsäure (25 gew.-%ig), aus dem anderen Tropftrichter synchron dazu eine Mischung aus 20 Teilen Tallölfettsäure und 180 Teilen Alphapinen zulaufen. Während dieser Zeit scheiden sich 340 Teile eines wäßrigen Destillates am Wasserabscheider ab.

Nach Beendigung der Wasserabscheidung entfernt man den Wasserabscheider und destilliert am absteigenden Kühler bei einer Sumpftemperatur von 200°C die flüchtigen Bestandteile ab, legt Vakuum an und behandelt den Ansatz noch eine weitere Stunde bei 205 °C unter Wasserstrahlvakuum. Dann wird ausgeleert. Es fallen 811 Teile eines modifizierten Novolaks mit einem Schmelzpunkt von 98°C, einer Viskosität von 1300 mPa•s/20°C (1:1 in Methoxyisopropanol) an. Die B-Zeit einer Mischung aus 9 Teilen Harz und 1 Teil Hexamethylentetramin beträgt bei 150°C 6,5 Minuten.

Beispiel 4

Es wird sonst wie im Beispiel 3 verfahren, aber eine Mischung aus 100 Teilen Tallölfettsäure und 100 Teilen Alphapinen verwendet.

Die Ausbeute beträgt 786 g, der Schmelzpunkt 94°C und die wie oben bestimmte Viskosität 1600 mPa•s/20°C. Die wie oben beschrieben bestimmte B-Zeit beträgt 4 Minuten.

Beispiel 5

Es wird sonst wie im Beispiel 3 verfahren, aber eine Mischung aus 180 Teilen Tallölfettsäure und 20 Teilen Alphapinen verwendet. Die Ausbeute beträgt 791 g.

Der Schmelzpunkt beträgt 88°C, die wie oben bestimmte Viskosität 1200 mPa•s/20°C und die wie oben bestimmte B-Zeit beträgt 2 1/2 Minuten.

Beispiel 6

In einem Reaktionsgefäß wie im Beispiel 2 beschrieben werden 658 Teile Phenol, 150 Teile Xylol, 1,8 Teile Schwefelsäure (25 gew.-%ig), 180 Teile Kolophonium und 20 Teile Tallölfettsäure vorgelegt und auf 120°C erhitzt. Nachdem diese Temperatur erreicht ist, wird eine Mischung aus 397 Teilen wäßrigem Formaldehyd (37 gew.-%ig) und 24,3 Teile Schwefelsäure (25 gew.-%ig) innerhalb von drei Stunden, über den Zeitraum gleichmäßig verteilt, zugegeben.

Nach Beendigung der Umlaufdestillation werden der Wasserabscheider entfernt und am absteigenden Kühler bei einer Sumpftemperatur von 205°C die flüchtigen Bestandteile abdestilliert. Anschließend wird das Reaktionsgemisch eine weitere Stunde bei 205°C unter Wasserstrahlvakuum nachbehandelt. Die Ausbeute beträgt 776 g.

Der Schmelzpunkt des Harzes beträgt 94°C, die wie oben bestimmte Viskosität 1000 mPa•s/20°C und die B-Zeit einer Mischung aus 9 Teilen Harz und 1 Teil Hexamethylentetramin beträgt bei 150°C 2 1/2 Minuten.

Beispiel 7

Es wird sonst wie im Beispiel 6 verfahren, jedoch werden 20 Teile Kolophonium und 180 Teile Tallölfettsäure vorgelegt. Die Ausbeute beträgt 800 g.

Der Schmelzpunkt des Harzes beträgt 89°C, die wie oben bestimmte Viskosität 1200 mPa•s/20°C und die B-Zeit bei 150°C einer Mischung aus 9 Teilen Harz und 1 Teil Hexamethylentetramin beträgt 2 Minuten.

Beispiel 8

Gummitechnische Prüfung der Harze aus den Beispielen 3 bis 7 als Verstärkerharz mit Hexamethylentetramin im Gewichtsverhältnis 9:1

Die gummitechnische Prüfung als Verstärkerharz wird wie im Beispiel 1 durchgeführt. Als Vergleichsharz dient der Ausgangsnovolak aus Beispiel 1 (Alnovol VPN 1322). In der nachstehenden Tabelle 2 haben die Spalten Shore A, Modul 10, Modul 25 und Rollbiegetest (RB 15) die gleiche Bedeutung wie in Tabelle 1 des Beispiels 1. Außerdem sind die Spalten G', G'' und tan angegeben.

Die elastischen Eigenschaften von Gummi werden physikalisch exakt durch den Speichermodul G' beschrieben. Dieser entspricht dem Anteil der Arbeit, die nach Wegnahme der angelegten Spannung zurückgewonnen wird. G' korreliert mit der Härte und sollte somit möglichst hoch liegen.

Der viskose Anteil des Gummis wird durch den Verlustmodul G'' beschrieben. Dieser charakterisiert den Anteil der Arbeit, der in Wärme umgewandelt wird. G'' korreliert mit dem HBU und sollte möglichst niedrig liegen.

Der Verlustfaktor tan (= Tangens des Phasenwinkels d [tg d]) in der letzten Spalte ist aus dem Quotient G''/G' errechnet.

Tabelle 2

| Gummitechnische Verstärkerharzprüfung | | | | | | | |
|---|---|---|---|---|---|---|---|
| Harz aus | Shore A | Modul 10 | Modul 25 | RB 15 | G' | G'' | tan (G''/G') |
| Bsp. 3 | 85 | 1,7 | 2,4 | 41 °C | 31,0 | 3,64 | 0,118 |
| Bsp. 4 | 87 | 2,5 | 3,3 | 60 °C | 43,6 | 5,50 | 0,127 |
| Bsp. 5 | 86 | 2,6 | 3,5 | 60 °C | 50,0 | 5,60 | 0,113 |
| Bsp. 6 | 87 | 1,6 | 2,1 | 39 °C | 36,8 | 4,32 | 0,116 |
| Bsp. 7 | 90 | 2,1 | 2,7 | 45 °C | 44,2 | 5,62 | 0,128 |
| Alnovol VPN 1322 | 82 | 1,3 | 1,7 | 62 °C | 28,0 | 5,7 | 0,204 |

**Patentansprüche**
**Patentansprüche für folgende Vertragsstaaten : AT, CH, DE, FR, GB, IT, LI, LU, NL, SE**

1. Modifizierte Novolake, die aus Aldehyden und Phenolen, von denen zumindest ein Teil gegenüber Aldehyden trifunktionell ist, hergestellt und durch Umsetzung mit ungesättigten Verbindungen modifiziert worden sind, dadurch gekennzeichnet, daß die modifizierten Novolake als modifizierende Bestandteile Terpene und ungesättigte Fettsäuren und/oder deren Ester oder Amide enthalten, wobei das Gewichtsverhältnis zwischen Terpenen und ungesättigten Fettsäuren bzw. deren Ester oder Amide im Bereich von 98,5:2,5 bis 2,5:98,5 und das Gewichtsverhältnis zwischen der phenolischen Komponente und der Summe der Modifizierungskomponenten im Bereich von 95:5 bis 5:95 liegt, und die modifizierten Novolake einen Schmelzpunkt höher als 45 °C besitzen.

2. Modifizierte Novolake nach Anspruch 1 , dadurch gekennzeichnet, daß sie einen Schmelzpunkt höher als 55 °C besitzen.

3. Modifizierte Novolake nach Ansprüchen 1 und 2, dadurch gekennzeichnet, daß sie als modifizierende Bestandteile Terpene und Verbindungen aus der Gruppe Ölsäure, Linolsäure, Linolensäure, Leinölfettsäure, Sojafettsäure, Holzölfettsäure, Rizinolsäure, Rizinensäure,Tallölfettsäure und/oder deren Ester bzw. Mischester mit Mono- oder Polyalkoholen und/oder deren Amide enthalten.

4. Modifizierte Novolake nach Ansprüchen 1 bis 3, dadurch gekennzeichnet, daß sie Bestandteile aus bicyclischen und/oder tricyclischen Terpenen enthalten.

5. Modifizierte Novolake nach Ansprüchen 1 bis 4, dadurch gekennzeichnet, daß sie Bestandteile aus Tallölfettsäuren mit einem Harzgehalt von 0,1 bis 30 Gew.-%, bezogen auf die Tallölfettsäure, enthalten.

EP 0 362 727 B1

**6.** Verfahren zur Herstellung von modifizierten Novolaken nach Ansprüchen 1 bis 5, dadurch gekennzeichnet, daß die Modifizierung durch Zumischen der angegebenen Modifizierungskomponenten zu nichtmodifizierten Novolaken in den erforderlichen Mengen bei Temperaturen zwischen 80 und 300 °C, unter Mitverwendung von Schwefelsäure und/oder deren Derivaten als Katalysator erfolgt.

**7.** Verfahren nach Anspruch 6, dadurch gekennzeichnet, daß anstelle von nichtmodifizierten Novolaken deren Bestandteile, d. s. Phenole und Aldehyde, eingesetzt und diese mit den Modifizierungskomponenten im Eintopfverfahren zu modifizierten Novolaken umgesetzt werden.

**8.** Verwendung der modifizierten Novolake nach Ansprüchen 1 bis 5 als Verstärkerharze für Gummi und/oder Elastomere, wobei sie gemeinsam oder getrennt mit den Vernetzern Hexamethylentetramin und/oder Aminoplaste und/oder Resole in die noch nicht vulkanisierten Gummi- bzw. Elastomerenmischungen eingearbeitet werden.

**9.** Verwendung der modifizierten Novolake nach Ansprüchen 1 bis 5 als Klebrigmacher für Kautschuk, wobei sie in die noch nicht vulkanisierten Kautschukmischungen eingearbeitet werden.

**10.** Verwendung der modifizierten Novolake nach Ansprüchen 1 bis 5 als Bindemittel für Reibbeläge, wobei sie gemeinsam mit den Vernetzern Hexamethylentetramin und/oder Aminoplaste und/oder Resole zusammen mit anorganischen und/oder organischen Fasern unter Vernetzung geformt werden.

**11.** Verwendung der modifizierten Novolake nach Ansprüchen 1 bis 5 als Bindemittel für härtbare Formmassen, wobei sie gemeinsam mit den Vernetzern Hexamethylentetramin und/oder Aminoplaste und/oder Resole gemeinsam mit anorganischen und/oder organischen Fasern unter Vernetzung geformt werden.

**12.** Verwendung der modifizierten Novolake nach Ansprüchen 1 bis 5 als Imprägniermittel für flächige oder räumliche Gebilde, wobei sie gemeinsam mit den Vernetzern Hexamethylentetramin und/oder Aminoplaste und/oder Resole auf die zu imprägnierenden Gebildesubstrate aufgebracht und vernetzt werden.

**13.** Verwendung der modifizierten Novolake nach Ansprüchen 1 bis 5 als Bindemittel für Beschichtungen und Lacke, wobei sie gemeinsam mit den Vernetzern Hexamethylentetramin und/oder Aminoplaste und/oder Resole, Pigmenten und Füllstoffen, auf das zu beschichtende Substrat aufgebracht und vernetzt werden.

**14.** Verwendung der modifizierten Novolake nach Ansprüchen 1 bis 5 als Bindemittel für zerkleinerte, anorganische Substrate, wobei sie mit oder ohne die Vernetzungsmittel Hexamethylentetramin und/oder Aminoplaste und/oder Resole mit den Substraten vermischt und dann einer oder mehreren thermischen Nachbehandlungen unterzogen werden, wobei die Temperatur oberhalb der Zersetzungstemperatur des modifizierten Novolaks liegen kann.

**Patentansprüche für folgenden Vertragsstaat : ES**

**1.** Verfahren zur Herstellung von modifizierte Novolaken aus Aldehyden und Phenolen, von denen zumindest ein Teil gegenüber Aldehyden trifunktionell ist, durch Zumischen von ungesättigten Modifizierungskomponenten zu nichtmodifizierten Novolaken in den erforderlichen Mengen und Umsetzung der Reaktionsgemische bei Temperaturen zwischen 80 und 300 °C, dadurch gekennzeichnet, daß man die nichtmodifizierten Novolake unter Mitverwendung von Schwefelsäure und/oder deren Derivaten als Katalysator mit Terpenen und ungesättigten Fettsäuren und/oder deren Ester oder Amide umsetzt, wobei das Gewichtsverhältnis zwischen Terpenen und ungesättigten Fettsäuren bzw. deren Ester oder Amide im Bereich von 98,5:2,5 bis 2,5:98,5 und das Gewichtsverhältnis zwischen der phenolischen Komponente und der Summe der Modifizierungskomponenten im Bereich von 95:5 bis 5:95 liegt, und die resultierenden modifizierten Novolake einen Schmelzpunkt höher als 45 °C besitzen.

**2.** Verfahren nach Anspruch 1, dadurch gekennzeichnet, daß die resultierenden modifizierten Novolake einen Schmelzpunkt höher als 55 °C besitzen.

8

3. Verfahren nach Ansprüchen 1 und 2, dadurch gekennzeichnet, daß die Modifizierungskomponenten Terpene und Verbindungen aus der Gruppe Ölsäure, Linolsäure, Linolensäure, Leinölfettsäure, Sojafettsäure, Holzölfettsäure, Rizinolsäure, Rizinensäure, Tallölfettsäure und/oder deren Ester bzw. Mischester mit Mono- oder Polyalkoholen und/oder deren Amide enthalten.

4. Verfahren nach Ansprüchen 1 bis 3, dadurch gekennzeichnet, daß die Modifizierungskomponenten Bestandteile aus bicyclischen und/oder tricyclischen Terpenen enthalten.

5. Verfahren nach Ansprüchen 1 bis 4, dadurch gekennzeichnet, daß die Modifizierungskomponenten Bestandteile aus Tallölfettsäuren mit einem Harzgehalt von 0,1 bis 30 Gew.-%, bezogen auf die Tallölfettsäure, enthalten.

6. Verfahren nach Ansprüchen 1 bis 5, dadurch gekennzeichnet, daß anstelle von nicht-modifizierten Novolaken deren Bestandteile, d. s. Phenole und Aldehyde, eingesetzt und diese mit den Modifizierungskomponenten im Eintopfverfahren zu modifizierten Novolaken umgesetzt werden.

7. Verwendung der modifizierten Novolake, hergestellt nach Ansprüchen 1 bis 6, als Verstärkerharze für Gummi und/oder Elastomere, wobei sie gemeinsam oder getrennt mit den Vernetzern Hexamethylentetramin und/oder Aminoplaste und/oder Resole in die noch nicht vulkanisierten Gummi- bzw. Elastomerenmischungen eingearbeitet werden.

8. Verwendung der modifizierten Novolake, hergestellt nach Ansprüchen 1 bis 6, als Klebrigmacher für Kautschuk, wobei sie in die noch nicht vulkanisierten Kautschukmischungen eingearbeitet werden.

9. Verwendung der modifizierten Novolake, hergestellt nach Ansprüchen 1 bis 6, als Bindemittel für Reibbeläge, wobei sie gemeinsam mit den Vernetzern Hexamethylentetramin und/oder Aminoplaste und/oder Resole und mit anorganischen und/oder organischen Fasern geformt werden.

10. Verwendung der modifizierten Novolake, hergestellt nach Ansprüchen 1 bis 6, als Bindemittel für härtbare Formmassen, wobei sie gemeinsam mit den Vernetzern Hexamethylentetramin und/oder Aminoplaste und/oder Resole und mit anorganischen und/oder organischen Fasern unter Vernetzung geformt werden.

11. Verwendung der modifizierten Novolake, hergestellt nach Ansprüchen 1 bis 6, als Imprägniermittel für flächige oder räumliche Gebilde, wobei sie gemeinsam mit den Vernetzern Hexamethylentetramin und/oder Aminoplaste und/oder Resole auf die zu imprägnierenden Gebildesubstrate aufgebracht und vernetzt werden.

12. Verwendung der modifizierten Novolake, hergestellt nach Ansprüchen 1 bis 6, als Bindemittel für Beschichtungen und Lacke, wobei sie gemeinsam mit den Vernetzern Hexamethylentetramin und/oder Aminoplaste und/oder Resole Pigmenten und Füllstoffen auf das zu beschichtende Substrat aufgebracht und vernetzt werden.

13. Verwendung der modifizierten Novolake, hergestellt nach Ansprüchen 1 bis 6, als Bindemittel für zerkleinerte, anorganische Substrate, wobei sie mit oder ohne die Vernetzungsmittel Hexamethylentetramin und/oder Aminoplaste und/oder Resole mit den Substraten vermischt und dann einer oder mehreren thermischen Nachbehandlungen unterzogen werden, wobei die Temperatur oberhalb der Zersetzungstemperatur des modifizierten Novolaks liegen kann.

Claims
Claims for the following Contracting States : AT, CH, DE, FR, GB, IT, LI, LU, NL, SE

1. A modified novolak which has been prepared from aldehydes and phenols, at least some of which are trifunctional with respect to aldehydes, and modified by reaction with unsaturated compounds, wherein the modified novolak contains, as modifying components, terpenes and unsaturated fatty acids and/or esters or amides thereof, the weight ratio between the terpenes and the unsaturated fatty acids or esters or amides thereof being in the range from 98.5:2.5 to 2.5:98.5, and the weight ratio between the phenolic component and the sum of the modifying components being in the range from 95:5 to 5:95, and the modified novolak having a melting point above 45°C.

2. A modified novolak as claimed in claim 1, which has a melting point above 55°C.

3. A modified novolak as claimed in claim 1 or 2, which contains, as modifying components, terpenes and compounds from the group comprising oleic acid, linoleic acid, linolenic acid, linseed oil fatty acid, soya fatty acid, wood oil fatty acid, ricinoleic acid, ricinenic acid, tall oil fatty acid and/or esters or mixed esters thereof with mono- or polyalcohols and/or amides thereof.

4. A modified novolak as claimed in any of claims 1 to 3, which contains components comprising bicyclic and/or tricyclic terpenes.

5. A modified novolak as claimed in any of claims 1 to 4, which contains components comprising tall oil fatty acids having a resin content of from 0.1 to 30 % by weight, relative to the tall oil fatty acid.

6. A process for the preparation of a modified novolak as claimed in any of claims 1 to 5, wherein the modification is carried out by admixing the modifying components mentioned with unmodified novolaks in the necessary amounts at temperatures between 80 and 300°C, with the concomitant use of sulfuric acid and/or derivatives thereof as catalyst.

7. The process as claimed in claim 6, wherein the unmodified novolaks are replaced by components thereof, i.e. phenols and aldehydes, and the latter are reacted with the modifying components in a one-pot process to give the modified novolaks.

8. The use of a modified novolak as claimed in any of claims 1 to 5 as a reinforcing resin for rubber and/or elastomers, the novolak being incorporated into the still unvulcanized rubber or elastomer mixtures together or separately with the crosslinking agents, hexamethylenetetramine and/or amino resins and/or resols.

9. The use of a modified novolak as claimed in any of claims 1 to 5 as a tackifier for rubber, the novolak being incorporated into the still unvulcanized rubber mixtures.

10. The use of a modified novolak as claimed in any of claims 1 to 5 as a binder for friction linings, the novolak being shaped with crosslinking together with the crosslinking agents hexamethylenetetramine and/or amino resins and/or resols together with inorganic and/or organic fibers.

11. The use of a modified novolak as claimed in any of claims 1 to 5 as a binder for curable molding compositions, the novolak being shaped with crosslinking together with the crosslinking agents hexamethylenetetramine and/or amino resins and/or resols together with inorganic and/or organic fibers.

12. The use of a modified novolak as claimed in any of claims 1 to 5 as an impregnant for sheet-like or spatial structures, the novolak being applied to the structure substrates to be impregnated and crosslinked together with the crosslinking agents hexamethylenetetramine and/or amino resins and/or resols.

13. The use of a modified novolak as claimed in any of claims 1 to 5 as a binder for coatings and paints, the novolak being applied to the substrate to be coated and crosslinked together with the crosslinking agents hexamethylenetetramine and/or amino resins and/or resols, pigments and fillers.

14. The use of a modified novolak as claimed in any of claims 1 to 5 as a binder for comminuted, inorganic substrates, the novolak being mixed with the substrates with or without the crosslinking agents hexamethylenetetramine and/or amino resins and/or resols and then subjected to one or more thermal aftertreatments, it being possible for the temperature to be above the decomposition temperature of the modified novolak.

EP 0 362 727 B1

**Claims for the following Contracting State : ES**

1. A process for the preparation of a modified novolak from aldehydes and phenols, at least some of which are trifunctional with respect to aldehydes, by admixing unsaturated modifying components with unmodified novolaks in the necessary amounts and reacting the reaction mixtures at temperatures between 80 and 300°C, wherein the unmodified novolaks are reacted with terpenes and unsaturated fatty acids and/or esters or amides thereof, with the concomitant use of sulfuric acid and/or derivatives thereof as catalyst, the weight ratio between the terpenes and the unsaturated fatty acids or esters or amides thereof being in the range from 98.5:2.5 to 2.5:98.5, and the weight ratio between the phenolic component and the sum of the modifying components being in the range from 95:5 to 5:95, and the resultant modified novolak having a melting Point above 45°C.

2. The process as claimed in claim 1, wherein the resultant modified novolaks have a melting point above 55°C.

3. The process a claimed in claim 1 or 2, wherein the modifying components contain terpenes and compounds from the group comprising oleic acid, linoleic acid, linolenic acid, linseed oil fatty acid, soya fatty acid, wood oil fatty acid, ricinoleic acid, ricinenic acid, tall oil fatty acid and/or esters or mixed esters threeof with mono- or polyalcohols and/or amides thereof.

4. The process as claimed in any of claims 1 to 3, wherein the modifying component contains components comprising bicyclic and/or tricyclic terpenes.

5. The process as claimed in any of claims 1 to 4, wherein the modifying components contain components comprising tall oil fatty acids having a resin content of from 0.1 to 30 % by weight, relative to the tall oil fatty acid.

6. The process as claimed in any of claims 1 to 5, wherein the unmodified novolaks are replaced by components thereof, i.e. phenols and aldehydes, and the latter are reacted with the modifying components in a one-pot process to give the modified novolak.

7. The use of a modified novolak, prepared as claimed in any of claims 1 to 6, as a reinforcing resin for rubber and/or elastomers, the novolak being incorporated into the still unvulcanized rubber or elastomer mixtures together or separately with the crosslinking agents hexamethylenetetramine and/or amino resins and/or resols.

8. The use of a modified novolak prepared as claimed in any of claims 1 to 6, as a tackifier for rubber, the novolak being incorporated into the still unvulcanized rubber mixtures.

9. The use of a modified novolak prepared as claimed in any of claims 1 to 6, as a binder for friction linings, the novolak being shaped together with the crosslinking agents hexamethylenetetramine and/or amino resins and/or resols and with inorganic and/or organic fibers.

10. The use of a modified novolak prepared as claimed in any of claims 1 to 6, as a binder for curable molding compositions, the novolak being shaped with crosslinking together with the crosslinking agents hexamethylenetetramine and/or amino resins and/or resols and with inorganic and/or organic fibers.

11. The use of a modified novolak prepared as claimed in any of claims 1 to 6, as an impregnant for sheet-like or spatial structures, the novolak being applied to the structure substrates to be impregnated and crosslinked together with the crosslinking agents hexamethylenetetramine and/or amino resins and/or resols.

12. The use of a modified novolak prepared as claimed in any of claims 1 to 6, as a binder for coatings and paints, the novolak being applied to the substrate to be coated and crosslinked together with the crosslinking agents hexamethylenetetramine and/or amino resins and/or resols, pigments and fillers.

13. The use of a modified novolak prepared as claimed in any of claims 1 to 6, as a binder for comminuted, inorganic substrates, the novolak being mixed with the substrates with or without the

EP 0 362 727 B1

crosslinking agents hexamethylenetetramine and/or amino resins and/or resols and then subjected to one or more thermal aftertreatments, it being possible for the temperature to be above the decomposition temperature of the modified novolak.

**Revendications**
**Revendications pour les Etats contractants suivants : AT, CH, DE, FR, GB, IT, LI, LU, NL, SE**

1. Novolaques modifiées à base de aldéhydes et de phénols trifonctionnelles vis-à-vis d'aldéhyde, et modifiées par mélange avec des constituants insaturés, caractérisées en ce que les novolaques contiennent comme constituants modifiants des terpènes et des acides gras insaturés et/ou leurs esters ou amides, le rapport pondéral des terpènes aux acides gras insaturés ou à leurs esters ou amides étant compris dans l'intervalle de 98,5:2,5 à 2,5:98,5, le rapport pondéral entre le constituant phénolique et la somme des constituants modifiants étant compris entre 95:5 et 5:95, les novolaques modifiées ayant un point de fusion supérieur à 45°C.

2. Novolaques modifiées selon la revendication 1, caractérisées en ce qu'elles ont un point de fusion supérieur à 55°C.

3. Novolaques modifiées selon les revendications 1 et 2, caractérisées en ce qu'elles contiennent comme constituants modifiants des terpènes et des composés du groupe contenant l'acide oléique, l'acide linoléique, l'acide linolénique, l'acide gras dérivé de l'huile de lin, l'acide gras dérivé du soja, l'acide gras dérivé de l'huile de bois, l'acide ricinoléique, l'acide ricininique, l'acide gras dérivé du tall-oil et/ou leurs esters ou esters mixtes avec des mono- ou des polyalcools et/ou leurs amides.

4. Novolaques modifiées selon les revendications 1 à 3, caractérisées en ce qu'elles contiennent des constituants choisis parmi les terpènes bicycliques et/ou tricycliques.

5. Novolaques modifiées selon les revendications 1 à 4, caractérisées en ce qu'elles contiennent des constituants choisis parmi les acides gras dérivés du tall-oil, ayant une teneur en résine de 0,1 à 30 % en poids par rapport à l'acide gras dérivé du tall-oil.

6. Procédé pour préparer des novolaques modifiées selon les revendications 1 à 5, caractérisé en ce que la modification s'effectue par addition, à des novolaques non modifiées et en les quantités nécessaires, des constituants indiqués, à des températures de 80 à 300°C, par utilisation simultanée, en tant que catalyseur, d'acide sulfurique et/ou de ses dérivés.

7. Procédé selon la revendication 6, caractérisé en ce qu'on utilise à la place de novolaques non modifiées leurs constituants, c'est-à-dire des phénols et des aldéhydes, et qu'on fait réagir ces derniers avec les constituants modifiants dans le cadre d'un procédé en un pot pour obtenir des novolaques modifiées.

8. Utilisation des novolaques modifiées selon les revendications 1 à 5 comme résines de renforcement pour le caoutchouc et/ou les élastomères, où on les incorpore, simultanément ou séparément, avec les réticulants hexaméthylènetétramine et/ou des aminoplastes et/ou des résols, dans les mélanges de caoutchoucs ou d'élastomères non encore vulcanisés.

9. Utilisation des novolaques modifiées selon les revendications 1 à 5 comme agents de poisseux pour le caoutchouc, où on les incorpore dans les mélanges de caoutchoucs non encore vulcanisés.

10. Utilisation des novolaques modifiées selon les revendications 1 à 5 comme liants pour garnitures de frottement, où elles sont formées en même temps que les agents de réticulation hexaméthylènetétramine et/ou des aminoplastes et/ou des résols, et avec des fibres minérales et/ou organiques, avec réticulation.

11. Utilisation des novolaques modifiées selon les revendications 1 à 5 comme liants pour mélanges à mouler durcissables, où elles sont formées avec réticulation en même temps que les agents de réticulation hexaméthylènetétramine et/ou des aminoplastes et/ou des résols, en même temps que des fibres minérales et/ou organiques.

12

**12.** Utilisation des novolaques modifiées selon les revendications 1 à 5 comme agents d'imprégnation pour structures planes ou tridimensionnelles, où elles sont appliquées sur les substrats à imprégner, en même temps que les agents de réticulation hexaméthylènetétramine et/ou des aminoplastes et/ou des résols, et on les réticule.

**13.** Utilisation des novolaques modifiées selon les revendications 1 à 5 en tant que liants pour revêtements et laques, où on les applique sur le substrat à enduire en même temps que les agents de réticulation hexaméthylènetétramine et/ou des aminoplastes et/ou des résols, avec des pigments et des charges, et on les soumet à une réticulation.

**14.** Utilisation des novolaques modifiées selon les revendications 1 à 5 comme liants pour substrats minéraux broyés, où on les mélange aux substrats avec ou sans les agents de réticulation hexaméthylènetétramine et/ou des aminoplastes et/ou des résols, puis on les soumet à une ou plusieurs opérations de post-traitement thermique, la température pouvant être supérieure à la température de décomposition de la novolaque modifiée.

**Revendication pour l'Etat contractant suivant : ES**

**1.** Procédé pour préparer des novolaques modifiées à partir d'aldéhydes et de phénols, dont au moins une partie est trifonctionnelle vis-à-vis des aldéhydes, par mélange de constituants modifiants insaturés pour obtenir des novolaques modifiées en les quantités nécessaires et réaction des mélanges réactionnels à des températures de 80 à 300°C, caractérisés en ce qu'on fait réagir les novolaques non modifiées, en utilisant aussi de l'acide sulfurique et/ou ses dérivés en tant que catalyseurs, avec des terpènes et des acides gras insaturés et/ou leurs esters ou amides, le rapport pondéral des terpènes aux acides gras insaturés ou leurs esters ou amides étant compris entre 98,5:2,5 et 2,5:98,5, le rapport pondéral entre le constituant phénolique et la somme des constituants modifiants étant comprise entre 95:5 et 5:95, les novolaques modifiées obtenues ayant un point de fusion supérieur à 45°C.

**2.** Procédé selon la revendication 1, caractérisé en ce que les novolaques modifiées obtenues ont un point de fusion supérieur à 55°C.

**3.** Procédé selon les revendications 1 et 2, caractérisé en ce que les constituants modifiants contiennent des terpènes et des composés choisis dans l'ensemble comprenant l'acide oléique, l'acide linoléique, l'acide linolénique, l'acide gras dérivé de l'huile de lin, l'acide gras dérivé du soja, l'acide gras dérivé de l'huile de bois, l'acide ricinoléique, l'acide ricininique, l'acide gras dérivé du tall-oil et/ou leurs esters ou esters mixtes avec des mono- ou polyalcools et/ou leurs amides.

**4.** Procédé selon les revendications 1 à 3, caractérisé en ce que les constituants modifiants contiennent des constituants choisis parmi les terpènes bicycliques et/ou tricycliques.

**5.** Procédé selon les revendications 1 à 4, caractérisé en ce que les constituants modifiants contiennent des composants dérivés des acides gras dérivés du tall-oil ayant une teneur en résine de 0,1 à 30% en poids par rapport à l'acide gras dérivé du tall-oil.

**6.** Procédé selon les revendications 1 à 5 caractérisé, en ce qu'on utilise, à la place des novolaques non modifiées, leurs constituants, c'est-à-dire des phénols et des aldéhydes, et qu'on les fait réagir avec les constituants modifiants dans le cadre d'un procédé en un pot pour obtenir des novolaques modifiées.

**7.** Utilisation des novolaques modifiées, préparées selon les revendications 1 à 6, en tant que résine de renforcement cour le caoutchouc et/ou les élastomères, où on les incorpore, simultanément ou séparément, avec les réticulants hexaméthylènetétramine et/ou des aminoplastes et/ou des résols, dans les mélanges de caoutchouc ou d'élastomères non encore vulcanisés.

**8.** Utilisation des novolaques modifiées préparées selon les revendications 1 à 6, en tant qu'agents d'adhérisation pour le caoutchouc, où on les incorpore dans les mélanges de caoutchouc non encore vulcanisés.

**9.** Utilisation des novolaques modifiées préparées selon les revendications 1 à 6, en tant que liants cour les garniutures de frottement où elles sont formées en même temps que les agents de réticulation hexaméthylènetétramine et/ou des aminoplastes et/ou des résols, et avec des fibres minérales et/ou organiques.

**10.** Utilisation des novolaques modifiées, préparées selon les revendications 1 à 6, comme liants pour mélanges à mouler durcissables, où elles sont formées par réticulation en même temps que les agents de réticulation hexaméthylènetétramine et/ou des aminoplastes et/ou des résols et avec les fibres minérales et/ou organiques.

**11.** Utilisation des novolaques modifiées préparées selon les revendications 1 à 6, comme agents d'imprégnation pour des structures planes ou tridimensionnelles, où elles sont appliquées sur les substrats à imprégner, en même temps que les agents de réticulation hexaméthylènetétramine et/ou des aminoplastes et/ou des résols, et on les réticule.

**12.** Utilisation des novolaques modifiées, préparées selon les revendications 1 à 6, en tant que liants pour revêtements et laques, où on les applique en même temps avec les agents de réticulation hexaméthylènetétramine et/ou des aminoplastes et/ou des résols, avec des pigments et des charges sur le substrat à enduire et on les soumet à une réticulation.

**13.** Utilisation des novolaques modifiées préparées selon les revendications 1 à 6, en tant que liants pour substrats minéraux broyés, où on les mélange aux substrats avec ou sans agents de réticulation hexaméthylènetétramine et/ou des aminoplastes et/ou des résols, puis on les soumet à une ou plusieurs opérations de post-traitement thermique, la température pouvant être supérieure à la température de décomposition de la novolaque modifiée.